# EUROPÄISCHE PATENTANMELDUNG

(11) **EP 2 730 167 A1**
(43) Veröffentlichungstag der Anmeldung: **14.05.2014**
(21) Anmeldenummer: 12192255.3
(22) Anmeldetag: 12.11.2012
(51) Int. Cl.: A01N 3/00, A01N 25/04, A01N 33/12, A01N 43/16, A01N 59/00, A01N 59/16, A01N 65/00

(54) **Verfahren zur Behandlung gewebeverletzter Pflanzen**

(71) Anmelder: PlantoSys GmbH, 9427 Wolfhalden (CH)
(72) Erfinder: Koch, Walter, 9427 Wolfhalden / AR (CH)
(74) Vertreter: Schmauder & Partner AG Patent- & Markenanwälte VSP

(57) **Zusammenfassung**

Zur Behandlung einer gewebeverletzter Pflanze wird ein Wundbehandlungsmittel folgender Zusammensetzung auf einen gewebeverletzten Bereich der Pflanze aufgesprüht:
- 1 bis 50 Gew.-% eines Hydrophobierungsmittels für anorganische oder organische Substrate,
- bis zu 8 Gew.-% Fungizide,
- bis zu 1 Gew.-% Bakterizide,
- bis zu 1 Gew.-% pflanzenstärkende Wirkstoffe,
- bis zu 10 Gew.-% Farbstoffe oder Farbpigmente,
- bis zu 1 Gew.-% Entschäumer, und
- der Rest Wasser.

Damit kann ein Wundverschluss in Form einer wasserdampfdiffusionsoffenen, hydrophoben Lage mit einer wasserdampfdiffusionsäquivalenten Luftschichtdicke (S_{d}) von höchstens 0.1 m angebracht werden.

## Beschreibung

### Technisches Gebiet

Die vorliegende Erfindung betrifft ein Verfahren zur Behandlung gewebeverletzter Pflanzen sowie einen Wundverschluss und ein fungizid wirkendes Wundbehandlungsmittel für gewebeverletzte Pflanzen.

### Stand der Technik

Die Behandlung von Schnittwunden und anderen Verletzungen von Bäumen durch Aufbringen eines Wundverschlusses ist hinlänglich bekannt. Insbesondere wird bei Entfernung grösserer Äste ein Aufbringen von Wundverschluss auf die Schnittränder empfohlen, um die Bildung von Wundrandnekrosen zu vermeiden. Ebenso hat sich das Aufbringen eines Wundverschlusses bei anderen grösseren Baumverletzungen, beispielsweise durch Sturmschäden oder Hagelschlag, aber auch durch menschliche Einwirkung, als vorteilhaft erwiesen.

Es sind bereits zahlreiche Wundverschlussmittel beschrieben worden und auch im Handel erhältlich. Je nach Anwendungsbereichen enthalten diese Wundverschlussmittel neben den Grundbestandteilen zur Ausbildung des Wundverschlusses weitere nutzbringende Komponenten wie beispielsweise Fungizide und wachstumsfördernde Substanzen.

Beispielsweise ist in der DE 30 04 234 A1 ein Wundbehandlungs-, Wundverschluss- und Wundschutzmittel für Bäume beschrieben, das auf einer wasserverdünnbaren Kunststoffdispersion beruht und ein Salz des N-Nitroso-N-Cyclohexylhydroxylamins bzw. eine (N-cyclohexyldiazeniumdioxy)-Verbindung eines Metalls und optional weitere Zusatzstoffe, insbesondere ein trocknendes Öl enthält. Das Mittel soll eine geschlossene Schicht oder einen Film auf dem Holz bilden und nicht abblättern oder reissen.

Ein gemeinsames Merkmal der bekannten Wundverschlussmittel liegt darin, dass grundsätzlich die Bildung eines schichtartigen Überzugs auf dem gewebeverletzten Bereich angestrebt wird. Zu diesem Zweck enthalten die bekannten Wundverschlussmittel zumeist einen pastenartigen Bestandteil oder eine aushärtende Komponente.

Die bekannten Wundverschlussmittel haben jedoch erhebliche Nachteile. Insbesondere besteht die Gefahr, dass Regenwasser beispielsweise infolge von Rissbildung unter die Schutzschicht dringt und dort zu Fäulnis und/oder Pilzbefall führt. Darüber hinaus behindern die bekannten Wundverschlüsse das erwünschte Austrocknen der Baumwunde und behindern dadurch die Wundheilung.

Die obigen Nachteile wirken sich direkt auf die bekannten Verfahren zur Behandlung gewebeverletzter Bäume und anderer Pflanzen aus.

### Darstellung der Erfindung

Vor obigem Hintergrund besteht eine Aufgabe der Erfindung darin, ein verbessertes Verfahren zur Behandlung gewebeverletzter Pflanzen bereit zu stellen, das insbesondere frei von den oben genannten Nachteilen ist.

Weitere Aufgaben der Erfindung bestehen darin, einen verbesserten Wundverschluss sowie ein verbessertes Wundbehandlungsmittel für gewebeverletzte Pflanzen anzugeben.

Diese Aufgaben werden erfindungsgemäss gelöst durch das im Anspruch 1 definierte Verfahren, den im Anspruch 6 definierten Wundverschluss und das im Anspruch 9 definierte Wundbehandlungsmittel.

Vorteilhafte Ausgestaltungen der Erfindung sind nachfolgend beschrieben und in den abhängigen Ansprüchen definiert.

Beim erfindungsgemässen Verfahren wird auf einen gewebeverletzten Bereich einer Pflanze ein Wundbehandlungsmittel folgender Zusammensetzung aufgesprüht:
- 1 bis 50 Gew.-% eines Hydrophobierungsmittels für anorganische oder organische Substrate,
- gegebenenfalls bis zu 8 Gew.-% Fungizide,
- gegebenenfalls bis zu 1 Gew.-% Bakterizide,
- gegebenenfalls bis zu 1 Gew.-% pflanzenstärkende Wirkstoffe,
- gegebenenfalls bis zu 10 Gew.-% Farbstoffe oder Farbpigmente,
- gegebenenfalls bis zu 1 Gew.-% Entschäumer, und
- der Rest Wasser.

Unter dem Begriff "Hydrophobierungsmittel für anorganische oder organische Substrate" sind im vorliegenden Zusammenhang grundsätzlich jegliche Substanzen oder Substanzgemische zu verstehen, welche dazu geeignet sind, nach Auftragen auf einer entsprechenden Unterlage deren Oberfläche wasserabstos-send(er) zu machen (*vgl. "*Hydrophobieren" in: Römpp Chemie Lexikon, J. Falbe und M. Regitz, Hsg., 9. Auflage 1990, Georg Thieme Verlag, Stuttgart*).* Insbesondere eignen sich für die vorliegende Erfindung die in der Bauindustrie üblichen Hydrophobierungsmittel wie beispielsweise kokondensierte Aminosilane, organofunktionelle Silansysteme, durch Aminogruppen blockierte organofunktionelle Silansysteme, Fluoralkylsiloxane, Aluminiumseifen und Zirkonseifen. Die Verwendung der Einzahl "Hydrophobierungsmittel" schliesst nicht aus, dass es sich hierbei um eine Mischung mehrerer Substanzen, insbesondere mehrerer hydrophobierend wirkender Substanzen handelt.

Der Anteil des Hydrophobierungsmittels kann in einem breiten Bereich von 1 bis 50 Gew.-% bezogen auf das Gesamtgewicht des Wundbehandlungsmittels gewählt werden. Vorzugsweise beträgt der Gewichtsanteil des Hydrophobierungsmittels 5 bis 20 Gew.-% (Ansprüche 2 und 10).

Grundsätzlich kann das erfindungsgemässe Verfahren mit einem Wundbehandlungsmittel durchgeführt werden, das lediglich ein Hydrophobierungsmittel und Wasser enthält. Vorteilhaft ist es jedoch, wenn ein Wundbehandlungsmittel verwendet wird, das zudem 0.2 bis 8 Gew.-% eines Fungizides enthält (Anspruch 3).

Unter dem Begriff "Fungizid" sind zunächst jegliche chemische oder biologische Wirkstoffe zu verstehen, die Pilze oder ihre Sporen abtöten oder deren Wachstum behindern oder verhindern. Es versteht sich jedoch, dass im vorliegenden Zusammenhang wie generell bei garten- und forstwirtschaftlichen Anwendungen primär solche Fungizide zu wählen sind, die für die zu schützende Pflanze möglichst unschädlich sind. Die Verwendung der Einzahl "Fungizid" schliesst nicht aus, dass es sich hierbei um eine Mischung mehrerer Substanzen, insbesondere mehrerer fungizid wirkender Substanzen handelt.

Als Fungizid kann beispielsweise Dichlofluanid, Propioconazol oder Didecyldiethylammoniumchlorid verwendet werden, das auch als Bakterizid eingesetzt wird. Gemäss einer weiteren vorteilhaften Ausführungsform umfasst das Fungizid ein kolloidales Metall oder Metalloxid oder Metallsalz, beispielsweise Gold, Kupfer, Silber, Zinkoxid, Silberoxid, Kupferhydroxid und/oder Kupferoxichlorid. Vorzugsweise handelte es sich beim Fungizid um Gold, Kupfer und/oder Silber (Ansprüche 4, 8 und 11).

Gemäss einem weiteren Aspekt der Erfindung wird ein fungizid wirkendes Wundbehandlungsmittel bereitgestellt, das aufsprühbar ist und folgende Zusammensetzung aufweist:
- 1 bis 50 Gew.-% eines Hydrophobierungsmittels für anorganische oder organische Substrate,
- 0.2 bis 8 Gew.-% Fungizide,
- gegebenenfalls bis zu 1 Gew.-% Bakterizide,
- gegebenenfalls bis zu 1 Gew.-% pflanzenstärkende Wirkstoffe,
- gegebenenfalls bis zu 10 Gew.-% Farbstoffe oder Farbpigmente,
- gegebenenfalls bis zu 1 Gew.-% Entschäumer, und
- der Rest Wasser.

Vorteilhafterweise enthält das Wundbehandlungsmittel zudem (Ansprüche 5 und 12):
- 0.1 bis 1 Gew.-% Bakterizide, und/oder
- 0.1 bis 1 Gew.-% pflanzenstärkende Wirkstoffe, und/oder
- 1 bis 10 Gew.-% Farbstoffe oder Farbpigmente, und/oder
- 0.1 bis 1 Gew.-% Entschäumer.

Die Zugabe eines Bakterizides verhindert einen schädlichen Bakterienbefall des verletzten Bereichs. Beispiele geeigneter Bakterizide sind Triclosan oder tertiäre Amine. Vorteilhafterweise können auch natürlicher Bakterizide wie Manukaöl, Nelkenöl oder Thymianöl verwendet werden.

Die Zugabe eines pflanzenstärkenden Wirkstoffes fördert allgemein die Wundheilung der gewebeverletzten Pflanze und ist somit vorteilhaft. Beispiele geeigneter pflanzenstärkender Wirkstoffe sind kolloidales Siliziumdioxid, Baumrindenextrakt, Salicin, Jasmonsäure und deren Derivate, phosphorige Säure und deren Salze sowie Chitosan.

Die Zugabe eines Farbstoffes bzw. von Farbpigmenten hat primär ästhetische Gründe. Darüber hinaus kann durch Einfärbung in einem Farbton, welcher der unverletzten Pflanze entspricht, ein gewisser Schutz beispielsweise gegen unerwünschtes Anfassen durch Passanten erzielt werden. Geeignete Farbpigmente sind beispielsweise Chromoxidgrün und Eisenoxidbraun.

Die Zugabe eines Entschäumers verbessert die Aufsprühbarkeit des Wundbehandlungsmittels. Entschäumer sind bekanntermassen chemische Formulierungen mit ausgeprägter Grenzflächenaktivität, die dazu geeignet sind, eine unerwünschte Schaumbildung zu vermeiden oder bereits gebildeten Schaum zu zerstören. Beispiele geeigneter Entschäumer sind Dimethylpolysiloxane, Mineralöle, Pinienöl, Siliziumdioxidpartikel haltige Silikone, langkettige Alkohole sowie langkettige Carbonsäuren und deren Ester.

Gemäss einem weiteren Aspekt der Erfindung wird ein Wundverschluss für gewebeverletzte Pflanzen bereitgestellt, welcher durch eine auf einen gewebeverletzten Bereich einer Pflanze aufgesprühte, wasserdampfdiffusionsoffene Lage eines Hydrophobierungsmittels für anorganische oder organische Substrate gebildet ist und eine wasserdampfdiffusionsäquivalente Luftschichtdicke (s_{d}) von höchstens 0.1 m aufweist. Insbesondere lassen sich derartige Wundverschlüsse mit dem erfindungsgemässen Verfahren anbringen. Vorteilhafterweise wird dabei das erfindungsgemässe fungizid wirkende Wundbehandlungsmittel eingesetzt.

Der Begriff der wasserdampfdiffusionsäquivalenten Luftschichtdicke s_{d} ist ein allgemein gebräuchliches Mass für die Wasserdampfdurchlässigkeit einer Schicht. Dabei entspricht der s_{d}-Wert der Dicke einer Luftschicht, die den gleichen Wasserdampfdiffusionswiderstand wie die betrachtete Materialschicht hat.

Vorteilhafterweise beträgt die wasserdampfdiffusionsäquivalente Luftschichtdicke (s_{d}) höchstens 0.05 m, insbesondere höchstens 0.01 m (Anspruch 7).

Gemäss einer besonders vorteilhaften Ausgestaltung umfasst der Wundverschluss ein Fungizid, vorzugsweise ein submikron-partikuläres Metall oder Metalloxid oder Metallsalz, beispielsweise Gold, Kupfer, Silber, Zinkoxid, Silberoxid, Kupferhydroxid und/oder Kupferoxichlorid. Vorzugsweise handelt es sich beim Fungizid um Gold, Kupfer und/oder Silber (Anspruch 8). Zusätze von Metallen bzw. Metalloxiden oder Metallsalzen in submikron-partikulärer Form sind an sich aus verschiedenen Anwendungsgebieten bekannt. Im vorliegenden Zusammenhang besteht die submikron-partikuläre Substanz aus Partikeln mit einer mittleren Korngrösse von weniger als 500 nm, vorzugsweise weniger als 100 nm. Besonders wirksam ist eine mittlere Partikelgrösse von 5 bis 50 nm. Die im Wundverschluss befindlichen Partikel können insbesondere durch Abscheidung des im Wundbehandlungsmittel in kolloidaler Form vorliegenden Metalls gebildet werden.

Bei der Anwendung des erfindungsgemässen Verfahrens wird wie weiter oben erläutert ein wasserbasiertes Wundbehandlungsmittel auf den gewebeverletzten Pflanzenbereich aufgesprüht. Nach Verdunsten des Wassers bleiben im Wesentlichen nur das im Wundbehandlungsmittel enthaltene Hydrophobierungsmittel und etwaige Zusätze übrig. Dementsprechend zeichnet sich der erfindungsgemässe Wundverschluss durch eine annähernd schichtlose, offenporige Gestalt aus, da er bei richtiger Auftragung deutlich weniger als 5 µm, typischerweise höchstens 1 µm, vorzugsweise höchstens 500 nm dick ist. Dank der hydrophoben Eigenschaften perlt Regenwasser vom Wundverschluss ab, sodass keine unerwünschte Wasseransammlung stattfindet. Da der Wundverschluss zudem für Wasserdampfdiffusion offen ist, kann die Verletzung der Pflanze selbst bei nasser Witterung optimal austrocknen und ausheilen.

Mit dem bevorzugten Zusatz eines Fungizids, das vorzugsweise auch bakterizide Wirkung hat, gegebenenfalls ergänzt durch ein natürliches Bakterizid, wird ein höchst unerwünschter Pilz- und/oder Bakterienbefall des gewebeverletzten Bereichs verhindert.

Das erfindungsgemässe Wundbehandlungsmittel ist kein Bienengift und hat auch keine phytotoxischen Wirkungen. Es ist kostengünstig herstellbar und sehr einfach anwendbar, womit es auch wirtschaftlich einsetzbar ist.

Das erfindungsgemässe Verfahren bzw. das erfindungsgemässe Wundbehandlungsmittel ist nicht beschränkt auf Baumäste, sondern auch für Tomatenpflanzen, namentlich zur Behandlung gegen Stengel-Botritis, aber auch für Sträucher geeignet.

### Wege zur Ausführung der Erfindung

Ausführungsbeispiele der Erfindung werden nachfolgend näher beschrieben.

### Beispiel 1

Ein fungizid wirkendes, aufsprühbares Wundbehandlungsmittel weist folgende Rezeptur auf (Mengenangaben in Gew.-%):

| | | |
|---|---|---|
| Hydrophobierungsmittel | Polydimethylsiloxanemulsion | 10.0 |
| Wasser | | 79.17 |
| Fungizid | kolloidales Kupfer | 5.0 |
| Fungizid | kolloidales Silber | 5.0 |
| Pflanzenstärker | kolloidales Siliziumdioxid | 0.4 |
| Pflanzenstärker | Baumrindenextrakt | 0.33 |
| Entschäumer | | 0.10 |
| Summe | | 100.00 |

### Beispiel 2

Ein weiteres fungizid wirkendes, aufsprühbares Wundbehandlungsmittel weist folgende Rezeptur auf (Mengenangaben in Gew.-%):

| | | |
|---|---|---|
| Hydrophobierungsmittel | Dynasylan F8815* | 20.0 |
| Wasser | | 74.17 |
| Fungizid | kolloidales Silber | 5.0 |
| Pflanzenstärker | kolloidales Siliziumdioxid | 0.4 |
| Pflanzenstärker | Chitosan | 0.33 |
| Entschäumer | | 0.10 |
| Summe | | 100.00 |

| | | |
|---|---|---|
| * Dynasylan^{®} F 8815 ist ein fluoralkylfunktionelles, wasserbasierendes Oligosiloxan, das von Evonik Industries vertrieben wird. Es wird für den Einsatz als Oberflächenmodifizierungsmittel auf oxidischen, carboxy- und hydroxy-funktionellen Substraten empfohlen. | | |

### Beispiel 3

Ein fungizid wirkendes, aufsprühbares eingefärbtes Wundbehandlungsmittel weist folgende Rezeptur auf (Mengenangaben in Gew.-%):

| | | |
|---|---|---|
| Hydrophobierungsmittel | Dynasylan SIVO 121* | 25.0 |
| Wasser | | 64.17 |
| Fungizid | Didecyldimethylammoniumchlorid | 0.33 |
| Pflanzenstärker | kolloidales Siliziumdioxid | 0.4 |
| Farbstoff | Chromoxidgrün | 5.0 |
| Farbstoff | Eisenoxidbraun | 5.0 |
| Entschäumer | | 0.10 |
| Summe | | 100.00 |

| | | |
|---|---|---|
| * Dynasylan^{®} SIVO 121 ist ein organofunktionelles Silan, das von Evonik Industries vertrieben wird. Es wird insbesondere für die Holzimprägnierung empfohlen. | | |

### Anwendung

Zur Behandlung einer gewebeverletzten Pflanze wird auf den gewebeverletzten Bereich der Pflanze ein Wundbehandlungsmittel mit einer der obigen Zusammensetzungen aufgesprüht.

Vorteilhafterweise ist in aller Regel eine einzige Aufsprühung des Wundbehandlungsmittels erforderlich.

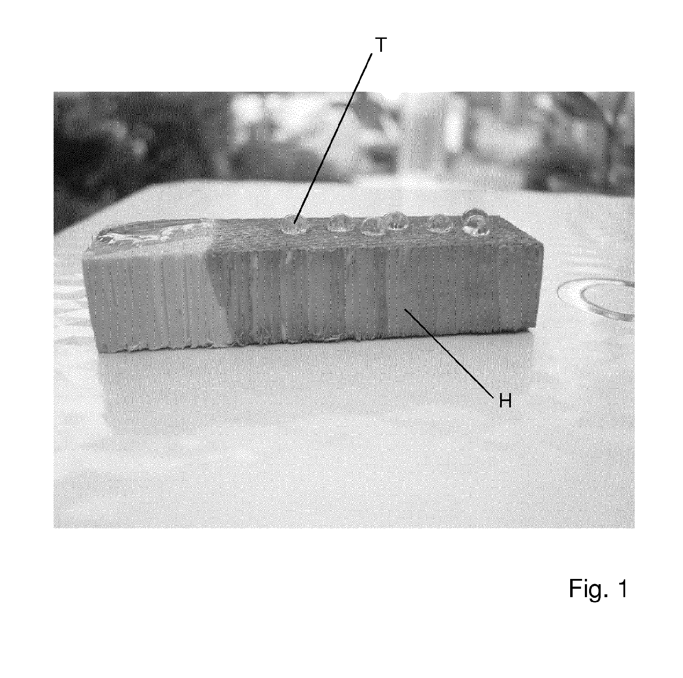

Die Figur 1 zeigt eine fotografische Aufnahme eines Holzstücks H, das bis auf einen kleinen Bereich (vorne links, heller) mit dem Wundbehandlungsmittel des Beispiels 1 besprüht wurde. Die dabei hervorgerufene Hydrophobierung ist deutlich an der Gestalt der Wassertropfen T auf der oberen Hirnholzfläche ersichtlich.

## Patentansprüche

1. Verfahren zur Behandlung gewebeverletzter Pflanzen, **dadurch gekennzeichnet, dass** man auf einen gewebeverletzten Bereich einer Pflanze ein Wundbehandlungsmittel folgender Zusammensetzung aufsprüht:
- 1 bis 50 Gew.-% eines Hydrophobierungsmittels für anorganische oder organische Substrate,
- bis zu 8 Gew.-% Fungizide,
- bis zu 1 Gew.-% Bakterizide,
- bis zu 1 Gew.-% pflanzenstärkende Wirkstoffe,
- bis zu 10 Gew.-% Farbstoffe oder Farbpigmente,
- bis zu 1 Gew.-% Entschäumer, und
- der Rest Wasser.

2. Verfahren nach Anspruch 1, wobei der Gewichtsanteil des Hydrophobierungsmittels 5 bis 20 Gew.-% beträgt.

3. Verfahren nach Anspruch 1 oder 2, wobei das Wundbehandlungsmittel 0.2 bis 8 Gew.-% eines Fungizides enthält.

4. Verfahren nach Anspruch 3, wobei das Fungizid vorzugsweise ein kolloidales Metall oder Metalloxid oder Metallsalz, insbesondere Gold, Kupfer und/oder Silber, umfasst.

5. Verfahren nach einem der Ansprüche 1 bis 4, wobei das Wundbehandlungsmittel
- 0.1 bis 1 Gew.-% Bakterizide, und/oder
- 0.1 bis 1 Gew.-% pflanzenstärkende Wirkstoffe, und/oder
- 1 bis 10 Gew.-% Farbstoffe oder Farbpigmente, und/oder
- 0.1 bis 1 Gew.-% Entschäumer
enthält.

6. Wundverschluss für gewebeverletzte Pflanzen, **dadurch gekennzeichnet, dass** er durch eine auf einen gewebeverletzten Bereich einer Pflanze aufgesprühte, wasserdampfdiffusionsoffene Lage eines Hydrophobierungsmittels für anorganische oder organische Substrate gebildet ist und eine wasserdampfdiffusionsäquivalente Luftschichtdicke (s_{d}) von höchstens 0.1 m aufweist.

7. Wundverschluss nach Anspruch 6, wobei die wasserdampfdiffusionsäquivalente Luftschichtdicke (s_{d}) höchstens 0.05 m, insbesondere höchstens 0.01 m beträgt.

8. Wundverschluss nach Anspruch 6 oder 7, weiterhin umfassend ein Fungizid, vorzugsweise ein submikron-partikuläres Metall oder Metalloxid oder Metallsalz, insbesondere submikron-partikuläres Gold, Kupfer und/oder Silber.

9. Fungizid wirkendes Wundbehandlungsmittel für gewebeverletzte Pflanzen, **dadurch gekennzeichnet, dass** es aufsprühbar ist und folgende Zusammensetzung aufweist:
- 1 bis 50 Gew.-% eines Hydrophobierungsmittels für anorganische oder organische Substrate,
- 0.2 bis 8 Gew.-% Fungizide,
- bis zu 1 Gew.-% Bakterizide,
- bis zu 1 Gew.-% pflanzenstärkende Wirkstoffe,
- bis zu 10 Gew.-% Farbstoffe oder Farbpigmente,
- bis zu 1 Gew.-% Entschäumer, und
- der Rest Wasser.

10. Wundbehandlungsmittel nach Anspruch 9, wobei der Gewichtsanteil des Hydrophobierungsmittels 5 bis 20 Gew.-% beträgt.

11. Wundbehandlungsmittel nach Anspruch 9 oder 10, wobei das Fungizid vorzugsweise ein kolloidales Metall oder Metalloxid oder Metallsalz, insbesondere Gold, Kupfer und/oder Silber, umfasst.

12. Wundbehandlungsmittel nach einem der Ansprüche 9 bis 11, enthaltend
- 0.1 bis 1 Gew.-% Bakterizide, und/oder
- 0.1 bis 1 Gew.-% pflanzenstärkende Wirkstoffe; und/oder
- 1 bis 10 Gew.-% Farbstoffe oder Farbpigmente; und/oder
- 0.1 bis 1 Gew.-% Entschäumer.
